# EUROPÄISCHE PATENTANMELDUNG

(11) **EP 4 520 545 A1**
(43) Veröffentlichungstag der Anmeldung: **12.03.2025**
(21) Anmeldenummer: 23195889.3
(22) Anmeldetag: 07.09.2023
(51) Int. Cl.: B60C 1/00, B60C 11/03, B60C 11/11, B60C 11/12, C08K 3/04, C08K 3/36, C08L 7/00, C08L 9/06

(54) **LAUFSTREIFEN, FAHRZEUGREIFEN UND ZUGEHÖRIGE KAUTSCHUKMISCHUNG**

(71) Anmelder: Continental Reifen Deutschland GmbH, 30175 Hannover (DE)
(72) Erfinder: Wolf, Andreas, 30165 Hannover (DE); Shadomy, Spencer, 30165 Hannover (DE); Odle, Shannon, 30165 Hannover (DE); Vatterott, Christoph, 30165 Hannover (DE); Pikna, Michal, 30165 Hannover (DE); Meier, Nico, 30165 Hannover (DE)
(74) Vertreter: Continental Corporation

(57) **Zusammenfassung**

Laufstreifen für einen Fahrzeugreifen, wobei der Laufstreifen
- eine Kautschukmischung umfasst, umfassend
(a) einen oder mehr als einen natürlichen Kautschuk,
(b) einen oder mehr als einen Ruß, und
(c) einen oder mehr als einen Silica-Füllstoff,
und
-ein Profil aufweist, mit wenigstens zwei Umfangsrillen (1), wobei je eine Umfangsrille (1) je einen Schulterbereich (s) des Laufstreifens von einem axial zentralen Bereich (z) abgrenzt, wobei in dem axial zentralen Bereich (z) in Quer-und/oder Schrägrichtung verlaufende zentrale Negativelemente (2, 3, 4, 5, 6, 7) und in den Schulterbereichen (s) schulterseitige Negativelemente (8, 9) angeordnet sind,
-der eine oder mehr als eine natürliche Kautschuk in einer Gesamtmenge von maximal 55 phr vorliegt,
-die Gesamtmenge von (b) größer ist als die Gesamtmenge von (c),
-das Profil ein Negativvolumen von mehr als 16% aufweist, und
- die schulterseitigen Negativelemente (8, 9) unter einem Erstreckungswinkel α im Bereich von 8° bis 17° gegenüber der Axialrichtung verlaufen.

## Beschreibung

Die Erfindung betrifft einen Laufstreifen für einen Fahrzeugreifen, wobei der Laufstreifen
- eine Kautschukmischung umfasst, umfassend
   (a) einen oder mehr als einen natürlichen Kautschuk,
   (b) einen oder mehr als einen Ruß, und
   (c) einen oder mehr als einen Silica-Füllstoff,
      und
- ein Profil aufweist, das wenigstens zwei Umfangsrillen umfasst, wobei je eine Umfangsrille je einen Schulterbereich des Laufstreifens von einem axial zentralen Bereich abgrenzt, wobei in dem axial zentralen Bereich in Quer- und/oder Schrägrichtung verlaufende zentrale Negativelemente angeordnet sind und in den Schulterbereichen schulterseitige Negativelemente angeordnet sind.

Laufstreifen der oben beschriebenen Art sind an sich bekannt. Kautschukmischungen mit den angegebenen Inhaltsstoffen haben sich in der Reifenherstellung, insbesondere als Material für Laufstreifen bewährt. Gegenüber einem nicht profilierten Laufstreifen sind durch ein Profil gemäß dem beschriebenen Grundmuster verbesserte Nasseigenschaften sowie Matsch- und Schneeeigenschaften erzielbar.

Der Laufstreifen eines Fahrzeugreifens muss einer Vielzahl an Anforderungen gerecht werden. Besonders wichtige Eigenschaften sind Traktion, Handling, Rollwiderstand, Abriebeigenschaften und Haltbarkeit unter mechanischer Beanspruchung des Laufstreifens. Unter die Eigenschaft der Haltbarkeit unter mechanischer Beanspruchung ist insbesondere auch eine Widerstandsfähigkeit gegenüber Bordsteinkontakt zu zählen.

Grundsätzlich werden die genannten Eigenschaften sowohl durch eine Profilierung des Laufstreifens als auch durch eine dem Laufstreifen zugrunde liegende Kautschukmischung beeinflusst. Beispielsweise ist ein vergleichsweise geschlossenes Profildesign mit einem vergleichsweise geringen Negativvolumen grundsätzlich vorteilhaft für das Handling, den Rollwiderstand, die Abriebeigenschaften und die Haltbarkeit des Laufstreifens, wohingegen für eine hohe Traktion ein vergleichsweise offenes Profildesign mit vergleichsweise großem Negativanteil von Vorteil ist. Weiter beispielsweise kann eine Kautschukmischung, mit der eine besonders gute Widerstandsfähigkeit gegenüber Bordsteinkontakt erzielt wird, einen eher hohen und somit unvorteilhaften Rollwiderstand bedingen. Diese Gegensätzlichkeit zeigt bereits, dass mit Blick auf wünschenswerte Laufstreifeneigenschaften ein mehrdimensionaler Zielkonflikt besteht, der von einer Vielzahl an Variablen sowohl im Laufstreifenprofil als auch in der Kautschukmischung beeinflusst wird.

Der Erfindung liegt die Aufgabe zugrunde, einen Laufstreifen mit guten Traktionseigenschaften zu schaffen, der gleichzeitig gutes Handling, einen niedrigen Rollwiderstand und gute Haltbarkeit unter mechanischer Beanspruchung an den Tag legt. Es war insbesondere die Aufgabe, gleichzeitig eine vergleichsweise hohe (und sogar verbesserte) Haltbarkeit unter mechanischer Beanspruchung zu gewährleisten sowie einen außergewöhnlich vorteilhaften Rollwiderstand.

Eigene Untersuchungen haben überraschend gezeigt, dass diese Aufgabe durch ein spezifisches Profildesign in Kombination mit einer darauf abgestimmten Kautschukmischung auf einem unerwartet hohen Niveau gelöst werden kann. Insbesondere wird die Aufgabe erfindungsgemäß dadurch gelöst, dass eine entsprechende Kautschukmischung einen oder mehr als einen natürlichen Kautschuk in einer Gesamtmenge von maximal 55 phr umfasst, wobei die Gesamtmenge von einem oder mehr als einem Ruß größer ist als die Gesamtmenge von einem oder mehr als einem Silica-Füllstoff, wobei das Profil ein Negativvolumen von mehr als 16% aufweist, wobei die schulterseitigen Negativelemente unter einem Erstreckungswinkel α gegenüber der Axialrichtung verlaufen und wobei α einen Wert im Bereich von 8° bis 17° annimmt.

Um den Rollwiderstand eines Laufstreifens trotz eines vergleichsweise hohen Negativvolumens auf einem sehr guten Niveau zu halten, bedarf es geeigneter Maßnahmen. Hierzu kommt in dem erfindungsgemäßen Laufstreifen eine spezifisch definierte, auf Rollwiderstand optimierte Kautschukmischung zum Einsatz. Dank ihrer ungewöhnlichen Komposition weist die Kautschukmischung dabei erstaunlicherweise zusätzlich eine exzellente Robustheit und gute Voraussetzungen für eine hohe Widerstandsfähigkeit eines darauf basierenden Laufstreifens gegenüber Bordsteinkontakt auf. Hierfür verlässt die Erfindung das Gebiet konventioneller Reifenmischungen und kombiniert einen für moderne PKW-Reifen ungewöhnlich hohen Rußanteil mit einem für LKW-Reifen ungewöhnlich niedrigen Anteil an natürlichem Kautschuk. Zusätzlich und über den Effekt der Kautschukmischung hinaus wird die Widerstandsfähigkeit gegenüber Bordsteinkontakt durch den erfindungsgemäßen Erstreckungswinkel α der schulterseitigen Negativelemente auf ein exzellentes Maß angehoben. Dieser Effekt ist insbesondere synergetisch, im Zusammenspiel mit der erfindungsgemäßen Kautschukmischung zu beobachten. Mit dieser ungewöhnlichen Kombination miteinander verzahnter Merkmale erreicht die Erfindung gegenüber dem Stand der Technik eine exzellente Traktion bei niedrigem Rollwiderstand und gleichzeitig hoher Haltbarkeit unter mechanischer Beanspruchung.

Sofern im vorliegenden Text die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist.

In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner als eine maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein und mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden.

In einer bevorzugten Ausführungsform nimmt der Erstreckungswinkel α der schulterseitigen Negativelemente einen Wert im Bereich von 9° bis 15°, besonders bevorzugt von 10° bis 14° an. Die schulterseitigen Negativelemente müssen sich nicht geradlinig durch den Laufstreifen erstrecken sondern können geschwungen oder mit einem oder mehreren Knicken verlaufen. Vorzugsweise existiert jedoch eine Haupterstreckungsrichtung, entlang derer die schulterseitigen Negativelemente ihre größte Erstreckung durch den Laufstreifen aufweisen. Insbesondere ist die Ausdehnung eines schulterseitigen Negativelements entlang der Haupterstreckungsrichtung vorzugsweise wenigstens doppelt so groß, weiter vorzugsweise wenigstens fünfmal so groß wie eine Ausdehnung senkrecht zu der Haupterstreckungsrichtung. Der Erstreckungswinkel α wird anhand der Haupterstreckungsrichtung gemessen. Durch die schulterseitigen Negativelemente werden dem Laufstreifen für den Fall eines Kontakts mit einer Bordsteinkante besonders vorteilhafte mechanische Eigenschaften verliehen. Mit dem erfindungsgemäßen Erstreckungswinkel α wird insbesondere unter schrägem Anfahrtswinkel und bei schleifendem Kontakt mit dem Bordstein ein exzellenter Kompromiss zwischen Steifigkeit und Flexibilität gefunden. Dies gilt insbesondere im Zusammenspiel mit der vor- und/oder nachstehend beschriebenen Kautschukmischung.

Gemäß einer Ausführungsform können die schulterseitigen Negativelemente eine Tiefe von maximal 3 mm aufweisen, wobei in dem Schulterbereich unterhalb dieser Tiefe eine zusammenhängende Umfangsrippe ausgebildet ist. Diese Ausführungsform ist wegen der hohen Steifigkeit beispielsweise für den Einsatz an einem für eine Lenkachse bestimmten Fahrzeugreifen besonders geeignet.

Gemäß einer alternativen Ausführungsform können die schulterseitigen Negativelemente eine Tiefe von mehr als 3 mm und vorzugsweise zwischen 40% und 60% der maximalen Profiltiefe aufweisen, sodass zwischen den schulterseitigen Negativelementen schulterseitige Profilblöcke definiert werden. Auf diese Weise kann eine höhere Traktion erreicht werden. Ein solcher Laufstreifen ist beispielsweise für den Einsatz an einem für eine Antriebsachse bestimmten Fahrzeugreifen und/oder für den Offroad-Einsatz besonders geeignet. Ein schulterseitiges Negativelement kann entlang seiner Erstreckung durch den Laufstreifen auch eine variable Tiefe aufweisen; gemäß einer Ausführungsform weisen die schulterseitigen Negativelemente axial außen sowie axial innen, am Übergang in eine den Schulterbereich begrenzenden Umfangsrille, die maximale Profiltiefe auf und weisen im Zentrum ihrer Erstreckung eine Tiefe zwischen 40% und 60% der maximalen Profiltiefe auf. Hierdurch kann die Steifigkeit der Reifenschulter trotz guter Traktionseigenschaften auf einem ausreichend hohen Niveau gehalten werden.

Alternativ oder zusätzlich zu den schulterseitigen Negativelementen können weitere Oberflächenelemente und/oder Feineinschnitte in dem Schulterbereich des Laufstreifens ausgebildet sein. Oberflächenelemente zeichnen sich durch eine Tiefe von maximal 3 mm aus. Feineinschnitte zeichnen sich durch eine Breite von weniger als 3mm, vorzugsweise von weniger als 1,5 mm aus. Gemäß einer Ausführungsform können schulterseitige Negativelemente mit einer Tiefe zwischen 40% und 60% der maximalen Profiltiefe den Schulterbereich in schulterseitige Profilblöcke unterteilen, wobei im Wesentlichen parallel zu den schulterseitigen Negativelementen jeweils ein schulterseitiges Oberflächenelement quer durch jeweils einen schulterseitigen Profilbock verläuft. Durch solche Oberflächenelemente kann zusätzliche Traktion erzielt werden, ohne die Steifigkeit der Reifenschulter maßgeblich weiter zu reduzieren. Zwei Negativelemente verlaufen im Wesentlichen parallel zueinander, wenn ihre Haupterstreckungsrichtungen nicht mehr als 3°, vorzugsweise nicht mehr als 1,5° voneinander abweichen.

Ein Verhältnis zwischen einer maximalen Profiltiefe und einer Pitchlänge liegt vorzugsweise in einem Bereich von 19% bis 35%. Ein erwartbarer Zusammenhang wäre zunächst, dass ein vergleichsweise hohes Negativvolumen von über 16% mit einem größeren Verhältnis zwischen maximaler Profiltiefe und Pitchlänge einhergeht. Erfindungsgemäß wird das Negativvolumen hingegen so in dem Profil des Laufstreifens verteilt, dass das Verhältnis zwischen maximaler Profiltiefe und Pitchlänge vergleichsweise klein bleibt. Auf diese Weise kann das Profil vergleichsweise hart gehalten werden und der Laufstreifen behält trotz des vergleichsweise hohen Negativvolumens auch unabhängig von einer erfindungsgemäßen Kautschukmischung gute Rollwiderstandseigenschaften bei. Im Zusammenspiel mit der erfindungsgemäßen Kautschukmischung verleiht ein Profil mit dem genannten Verhältnis zwischen maximaler Profiltiefe und Pitchlänge dem Laufstreifen besonders hervorragende Rollwiderstandseigenschaften.

Das Verhältnis zwischen der maximalen Profiltiefe und der Pitchlänge kann in einem Bereich von 21% bis 27% liegen. Hiermit kann ein besonders hartes Profil geschaffen werden, was wiederum einem ganz besonders guten Rollwiderstand und gutem Handling zuträglich ist. Diese Ausführungsform kann für den Einsatz an einem für eine Lenkachse bestimmten Fahrzeugreifen besonders geeignet sein.

Alternativ kann das Verhältnis zwischen der maximalen Profiltiefe und der Pitchlänge in einem Bereich von 25% bis 32% liegen. Dies ist im Vergleich zu kleineren Verhältnissen zwischen maximaler Profiltiefe und Pitchlänge einer besseren Traktion zuträglich. Ein solcher Laufstreifen kann für den Einsatz an einem für eine Antriebsachse bestimmten Fahrzeugreifen besonders geeignet sein.

Die zentralen Negativelemente können Quer- und/oder Schrägrillen umfassen, wobei eine Tiefe der Quer- und/oder Schrägrillen zwischen 40% und 60% der maximalen Profiltiefe betragen kann. Auf diese Weise kann in dem axial zentralen Bereich ein guter Kompromiss zwischen Traktion und Steifigkeit gefunden werden, gemäß welchem die Quer- und/oder Schrägrillen ausgeprägt genug für eine hohe Traktion und insbesondere für den Einsatz an einem für eine Antriebsachse bestimmten Fahrzeugreifen ausgelegt sind. Die zentralen Negativelemente können einen ergänzenden Feineinschnitt umfassen, wobei der ergänzende Feineinschnitt entlang eines Rillengrundes wenigstens einer der Quer- oder Schrägrillen verläuft, wobei der ergänzende Feineinschnitt sich von dem Rillengrund aus um eine Tiefe zwischen 40% bis 60% der maximalen Profiltiefe radial nach innen erstreckt. Gemäß einer Ausführungsform sind ergänzende Feineinschnitte in allen Quer- und/oder Schrägrillen in dem axial zentralen Bereich vorgesehen. Durch die Kombination von Rille und ergänzendem Feineinschnitt können eine gute Traktion und eine hohe Entwässerungskapazität gewährleistet werden, ohne die Steifigkeit des Profils zu sehr zu beeinträchtigen.

Alternativ oder zusätzlich zu den Quer- und/oder Schrägrillen und den ergänzenden Feineinschnitten können Oberflächenelemente und/oder weitere Feineinschnitte in dem axial zentralen Bereich des Laufstreifens ausgebildet sein.

In einer Ausführungsform unterteilen die Quer- und/oder Schrägrillen gemeinsam mit den ergänzenden Feineinschnitten einen Laufstreifenbereich zwischen zwei Umfangsrillen in zentrale Profilblöcke, wobei im Wesentlichen parallel zu den Quer- und/oder Schrägrillen und ergänzenden Feineinschnitten jeweils ein sekundäres zentrales Negativelement in Form eines Feineinschnitts quer durch jeweils einen zentralen Profilblock verläuft und wobei das sekundäre zentrale Negativelement in Form eines Feineinschnitts sich bis auf eine Tiefe von beispielsweise 2 mm weniger als der maximalen Profiltiefe erstrecken kann.

Alternativ können Kombinationen aus primären Oberflächenelementen und Feineinschnitten als Separatoren von zentralen Profilblöcken in einem Laufstreifenbereich zwischen zwei Umfangsrillen fungieren. Hierbei kann jeweils ein Feineinschnitt entlang eines Grundes jeweils eines primären Oberflächenelements verlaufen, wobei der Feineinschnitt sich bis in eine Tiefe von beispielsweise 3,2 mm weniger als der maximalen Profiltiefe erstrecken kann. Im Wesentlichen parallel zu den Kombinationen aus primären Oberflächenelementen und Feineinschnitten kann jeweils ein sekundäres Oberflächenelement durch jeweils einen zentralen Profilblock verlaufen.

In einer bevorzugten Ausführungsform umfasst das Profil insgesamt vier Umfangsrillen, wobei zwei axial zentrale Umfangsrillen den axial zentralen Bereich in drei Teilbereiche trennen können. Die Umfangsrillen können einen zickzackförmigen Verlauf annehmen. Hierdurch kann zusätzliche Kantenlänge in Querrichtung geschaffen und somit die Traktion, insbesondere auf nassen, winterlichen und/oder matschigen Untergründen erhöht werden. Die zwei die beiden Schulterbereiche des Laufstreifens von dem axial zentralen Bereich abgrenzenden Umfangsrillen können ein Zickzackmuster mit einer Wellenlänge von einer Pitchlänge aufweisen. Die zwei axial zentralen Umfangrillen können ein Zickzackmuster mit zwei Wellenlängen je Pitchlänge aufweisen. Hierbei wird eine axiale Hin- und Zurückbewegung des Rillenverlaufs als Wellenlänge des Zickzackmusters bezeichnet.

Das Profil kann ein Negativvolumen zwischen 16,1 % und 18,5%, vorzugsweise zwischen 16,5% und 17,0% aufweisen. In dem Maße, wie durch quer und/oder schräg gegenüber der Umfangsrichtung verlaufende schulterseitige Negativelemente und/oder zentrale Negativelemente mehr oder weniger Negativvolumen in dem Laufstreifen bereitgestellt wird, können die Umfangsrillen entsprechend schmaler oder breiter ausgeführt werden, um insgesamt das gewünschte Negativvolumen zu erzielen.

Die vorliegende Erfindung betrifft zudem einen Fahrzeugreifen, umfassend einen erfindungsgemäßen Laufstreifen, vorzugsweise einen erfindungsgemäßen Laufstreifen wie im vorliegenden Text als bevorzugt beschrieben. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. Erfindungsgemäße Fahrzeugreifen können für Felgengrößen in einem Bereich zwischen 16 Zoll und 22 Zoll, vorzugsweise in einem Bereich zwischen 17,5 Zoll und 19,5 Zoll ausgelegt sein. In einer bevorzugten Ausführungsform weist ein erfindungsgemäßer Fahrzeugreifen eine Karkasse mit Festigkeitsträgern auf, wobei die Festigkeitsträger Stahl umfassen können und vorzugsweise zu mehr als 90% des Volumens der Festigkeitsträger aus Stahl bestehen. In einer bevorzugten Ausführungsform weist ein erfindungsgemäßer Fahrzeugreifen einen Tragfähigkeitsindex in einem Bereich von 1000 kg bis 2500 kg, vorzugsweise von 1400 kg bis 2000 kg auf. In ganz besonderer Weise sind die erfindungsgemäßen Fahrzeugreifen für den Einsatz an Fahrzeugen mit 2500 kg bis 4500 kg Leergewicht geeignet, beispielsweise für große Pickup-Trucks. Das Profil kann gemäß den vor- und/oder nachstehend beschriebenen Alternativen für den Einsatz an einer Lenkachse oder an einer Antriebsachse, für leichtere oder schwerere Fahrzeuge sowie für die Fahrt auf Asphalt oder im Offroad-Bereich eingestellt werden.

Wie bereits oben im Text ausgeführt, ist ein ausgewogenes Zusammenspiel zwischen Profileigenschaften (siehe vorstehenden Text) und Eigenschaften der dazugehörigen Kautschukmischung (siehe nachfolgenden Text) für die vorliegende Erfindung entscheidend.

Ein Laufstreifen umfasst oft eine sogenannte Base und eine sogenannte Cap, wobei die Base radial unterhalb der Cap angeordnet ist und das Profil des Laufstreifens in der Cap ausgebildet ist. Vorzugsweise kommt die erfindungsgemäße, vor- und/oder nachstehend beschriebene Kautschukmischung in der Cap zum Einsatz; weiter vorzugsweise besteht die Cap aus der Kautschukmischung.

Erfindungsgemäß umfasst die eingesetzte Kautschukmischung für den Laufstreifen
(a) einen oder mehr als einen natürlichen Kautschuk,
(b) einen oder mehr als einen Ruß, und
(c) einen oder mehr als einen Silica-Füllstoff,
wobei
- der eine oder mehr als eine natürliche Kautschuk in einer Gesamtmenge von maximal 55 phr vorliegt, und
- die Gesamtmenge von (b) größer als die Gesamtmenge von (c) ist. Dies bedeutet, dass, bezogen auf die Gesamtmengen, mehr Ruß als Silica-Füllstoff in der Kautschukmischung eingesetzt wird.

Bevorzugt ist ein erfindungsgemäßer Laufstreifen, vorzugsweise wie vorstehend oder nachstehend als bevorzugt beschrieben, wobei (a) in der Kautschukmischung in einer Gesamtmenge im Bereich von 35 bis 55 phr vorliegt, vorzugsweise von 35 bis 52 phr, weiter vorzugsweise von 36 bis 49 phr, bevorzugt von 36 bis 46 phr, am bevorzugtesten von 37 bis 43 phr. Entscheidend ist, dass eine Gesamtmenge von 55 phr nicht überschritten wird. Ist dies der Fall, wird überwiegend eine Verschlechterung des Rollwiderstandes und/oder des Abriebwiderstandes beobachtet (typischerweise beides), was nicht erwünscht ist. Wird hingegen diese Gesamtmenge von 55 phr nicht überschritten, wird regelmäßig eine sehr gute Steifigkeit und Stabilität bzw. Widerstandsfähigkeit bei gleichzeitig erwünschtem Rollwiederstand erzielt. Diese verbessert sich weiter, wenn insbesondere die oben genannten bevorzugten Bereiche eingehalten werden.

Vorzugsweise ist der eine oder mehr als eine natürliche Kautschuk ein natürliches Polyisopren mit der typischen Bezeichnung NR (natural rubber). Unter einem natürlichen Polyisopren (NR) wird ein Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen wird. Zudem wird im Kontext der vorliegenden Erfindung unter natürlichem Kautschuk bzw. natürlichem Polyisopren (NR) kein synthetisches Polyisopren (IR) verstanden. Natürlicher Kautschuk umfasst vorzugsweise überwiegend cis-1 ,4-Polyisopren. Grundsätzlich ist besonders bevorzugt, dass der eine oder mehr als eine natürliche Kautschuk ein high-cis natürlicher Kautschuk ist, vorzugsweise mit einem cis-1,4 Anteil größer 90 Gew.-%, vorzugsweise größer 95 %, am bevorzugtesten 99 % oder größer.

Neben dem zuvor genannten einen oder mehr als einen natürlichen Kautschuk gemäß (a), vorzugsweise natürliches Polyisopren, umfasst die Kautschukmischung vorzugsweise zusätzlich einen oder mehr als einen Dienkautschuk, welcher vorzugsweise ausgewählt ist aus der Gruppe bestehend aus synthetischem Polyisopren (IR), epoxidiertem Polyisopren (ENR), Butadien-Kautschuk (BR), Butadien-Isopren-Kautschuk, lösungspolymerisiertem Styrol-Butadien-Kautschuk (SSBR), emulsionspolymerisiertem Styrol-Butadien-Kautschuk (ESBR), und hydriertem Styrol-Butadien-Kautschuk. Ein besonders bevorzugter Dienkautschuk sind die Styrol-Butadien-Kautschuke (SBR), vorzugsweise das lösungspolymerisiertem Styrol-Butadien-Kautschuk (SSBR), ganz besonders bevorzugt in modifizierter Form mittels Substituenten (sogenannte funktionalisierte Styrol-Butadien-Kautschuke).

Bevorzugt ist ein erfindungsgemäßer Laufstreifen, vorzugsweise wie vorstehend oder nachstehend als bevorzugt beschrieben, wobei der eine oder mehr als eine zusätzliche Dienkautschuk in einer Gesamtmenge von mindestens 45 phr in der Kautschukmischung vorliegt, vorzugsweise in einem Bereich von 45 bis 65 phr vorliegt, vorzugsweise von 48 bis 65 phr, weiter vorzugsweise von 51 bis 64 phr, bevorzugt von 54 bis 64 phr, am bevorzugtesten von 57 bis 63 phr.

Der zusätzliche eine oder mehr als eine Dienkautschuk wird vorzugweise als fester und/oder flüssiger Dienkautschuk eingesetzt, um zu der erforderlichen Kautschukmischung im erfindungsgemäßen Laufstreifen zu gelangen.

Ganz besonders bevorzugt ist ein erfindungsgemäßer Laufstreifen, vorzugsweise wie vorstehend oder nachstehend als bevorzugt beschrieben, wobei die Kautschukmischung weiter
(d) einen oder mehr als einen funktionalisierten Styrol-Butadien Kautschuk umfasst, wobei das Mengenverhältnis, bezogen auf phr, von der Gesamtmenge von (d) zu der Gesamtmenge von (a) vorzugsweise im Bereich von 0,8 bis 1,95 liegt, weiter vorzugsweise von 0,9 bis 1,9, bevorzugt von 0,95 bis 1,85, weiter bevorzugt von 1,1 bis 1,8, am bevorzugtesten von 1,2 bis 1,75, weiter am bevorzugtesten von 1,35 bis 1,65, am weitesten bevorzugt von 1,45 bis 1,55.

Im Kontext der vorliegenden Erfindung fällt dieser spezifische Kautschuk unter den oben genannten zusätzlichen einen oder mehr als einen Dienkautschuk als eine spezifische Form dessen.

Weiter bevorzugt ist ein erfindungsgemäßer Laufstreifen, vorzugsweise wie vorstehend oder nachstehend als bevorzugt beschrieben, wobei der eine oder mehr als eine funktionalisierte Styrol-Butadien Kautschuk gemäß (d) in einer Gesamtmenge im Bereich von 45 bis 65 phr vorliegt, vorzugsweise von 48 bis 65 phr, weiter vorzugsweise von 51 bis 64 phr, bevorzugt von 54 bis 64 phr, am bevorzugtesten von 57 bis 63 phr.

Besonders bevorzugt ist ein erfindungsgemäßer Laufstreifen, vorzugsweise wie vorstehend oder nachstehend als bevorzugt beschrieben, wobei die Kautschukmischung nur einen zusätzlichen Dienkautschuk umfasst, besonders bevorzugt nur einen natürlichen Kautschuk und nur einen zusätzlichen Dienkautschuk, wobei besonders bevorzugt der nur eine zusätzliche Dienkautschuk der oben genannte funktionalisierte Styrol-Butadien-Kautschuk ist. Das im vorliegenden Text zum einen oder mehr als einen zusätzlichen Dienkautschuk Gesagte, gilt vorzugsweise entsprechend auch für diese spezifische Ausgestaltung. In manchen Fällen ist es jedoch auch bevorzugt, dass neben dem funktionalisierten Styrol-Butadien Kautschuk gemäß (d) ein oder mehr als ein weiterer Dienkautschuk in der Kautschukmischung vorliegt, vorzugsweise ausgewählt aus der oben genannten Gruppe an Dienkautschuke.

Bevorzugt ist ein erfindungsgemäßer Laufstreifen, vorzugsweise wie vorstehend oder nachstehend als bevorzugt beschrieben, wobei der eine oder mehr als eine funktionalisierte Styrol-Butadien Kautschuk gemäß (d) einen oder mehr als einen lösungspolymerisierten Styrol-Butadien-Kautschuk (SSBR) umfasst. Vorzugsweise ist diese Form eines Styrol-Butadien-Kautschuks der einzige Styrol-Butadien-Kautschuk in der Kautschukmischung.

Wie bereits oben ausgeführt ist dieser Styrol-Butadien-Kautschuk bzw. lösungspolymerisierten Styrol-Butadien-Kautschuk funktionalisiert, d.h. mittels Substituenten modifiziert. Vorzugsweise handelt es sich um Endgruppen-Funktionalisierungen, besonders bevorzugt um mono-Endgruppen-Funktionalisierungen. Dies bedeutet, dass in einer Polymerkette (überwiegend) nur ein Ende der zwei möglichen Enden mit einem Substituenten modifiziert ist. Vorzugsweise umfassen die Substituenten Hydroxy-Gruppen, Ethoxy-Gruppen, Epoxy-Gruppen, Stickstoff-enthaltende Gruppen (vorzugsweise umfassend AminoGruppen und/oder Ammonium-Gruppen), Carboxy-Gruppen und Silicium-enthaltende Gruppen. Besonders bevorzugt sind Silicium-enthaltende Gruppen, insbesondere bevorzugt sind Organosilicium-Gruppen. Besonders bevorzugte Organosilicium-Gruppen umfassen Silan-Gruppen und/oder Siloxan-Gruppen. Ganz besonders bevorzugt sind Substituenten, die die Fähigkeit besitzen, sowohl mit einem Ruß als auch mit einem Silica-Füllstoff eine Wechselwirkung einzugehen, wobei vorzugsweise mit Ruß eine schwache, koordinative Wechselwirkung eintritt und mit einem Silica-Füllstoff vorzugsweise eine kovalente Bindung eingegangen wird. Dies wird vorzugsweise durch einen Substituenten ermöglicht, der mindestens zwei der oben genannten Gruppen in einem Substituenten vereint. Besonders bevorzugt ist daher ein Substituent umfassend eine Silicium-enthaltende Gruppe (vorzugsweise eine Organosilicium-Gruppe) in Kombination mit einer Stickstoff-enthaltenden Gruppe (vorzugsweise eine Amino-und/oder Ammonium-Gruppe). Obwohl der Substituent die Fähigkeit besitzt, Wechselwirkungen sowohl zum Ruß als auch zum Silica-Füllstoff einzugehen, tritt vorzugsweise - überwiegend aus sterischen Gründen - letztendlich überwiegend nur eine Wechselwirkung ein.

Bevorzugt ist ein erfindungsgemäßer Laufstreifen, vorzugsweise wie vorstehend und/oder nachstehend als bevorzugt beschrieben, wobei in der Kautschukmischung der eine oder mehr als eine funktionalisierte Styrol-Butadien Kautschuk gemäß (d) ein gewichtsmittleres Molekulargewicht M_{w} von 200.000 bis 600.000 g/mol besitzt, vorzugsweise von 250.000 bis 575.000 g/mol, weiter bevorzugt von 300.000 bis 550.000 g/mol, ganz besonders bevorzugt von 350.000 bis 545.000 g/mol, insbesondere ganz besonders bevorzugt von 400.000 bis 540.000 g/mol. Das gewichtsmittlere Molekulargewicht wird mittels Gelpermeationschromatographie ermittelt (GPC; Polybutadien-Standard). Die Angabe des M_{w} bezieht sich auf das entsprechende Polymer inklusive der Substituenten.

Bevorzugt ist ein erfindungsgemäßer Laufstreifen, vorzugsweise wie vorstehend und/oder nachstehend als bevorzugt beschrieben, wobei in der Kautschukmischung der eine oder mehr als eine Dienkautschuk, vorzugsweise der eine oder mehr als eine funktionalisierte Styrol-Butadien Kautschuk gemäß (d), jeweils eine Glasübergangstemperatur T_{g} von -20 °C oder weniger aufweist, vorzugsweise in einem Bereich von -20 bis -110 °C, weiter bevorzugt von -30 bis - 100 °C, noch bevorzugter von -36 bis -93°C, noch weiter bevorzugt von -41 bis -86 °C, am bevorzugtesten von -48 bis -78 °C, am weiter bevorzugtesten von -55 bis - 70 °C.

Bevorzugt ist ein erfindungsgemäßer Laufstreifen, vorzugsweise wie vorstehend und/oder nachstehend als bevorzugt beschrieben, wobei in der Kautschukmischung der eine oder mehr als eine funktionalisierte Styrol-Butadien Kautschuk gemäß (d), jeweils einen Styrol-Gehalt in einem Bereich von 1 bis 30 Gew.-% aufweist, bezogen auf das Gesamtgewicht des Polymers, vorzugsweise von 4 bis 25 Gew.-%, weiter bevorzugt von 8 bis 20 Gew.-%, am bevorzugtesten von 11 bis 18 Gew.-%.

Bevorzugt ist ein erfindungsgemäßer Laufstreifen, vorzugsweise wie vorstehend und/oder nachstehend als bevorzugt beschrieben, wobei in der Kautschukmischung der eine oder mehr als eine funktionalisierte Styrol-Butadien Kautschuk gemäß (d), jeweils einen Vinylgehalt kleiner 50 %, bezogen auf alle ursprünglichen Butadien-Monomere im Polymer, vorzugsweise in einem Bereich von 5 bis 48 %, weiter bevorzugt von 15 bis 45 %, noch weiter bevorzugt von 17 bis 38 %, am bevorzugtesten von 24 bis 36 %. Vinyl-Gruppen treten typischerweise vereinzelt über das gesamte Rückgrat hinweg auf und bilden exponierte Doppelbindung in Seitengruppen aufgrund einer 1,2-Polymerisierung des Butadiens aus. Vorzugsweise ist der Vinylgehalt kleiner 50 % und größer 20 %.

Neben den bereits erwähnten Kautschuken umfasst die eingesetzte Kautschukmischung zudem ganz allgemein Füllstoffe, wie beispielsweise Ruße und Silica-Füllstoffe (Mischungsbestandteile (b) und (c)).

Bevorzugt ist ein erfindungsgemäßer Laufstreifen, vorzugsweise wie vorstehend und/oder nachstehend als bevorzugt beschrieben, wobei in der Kautschukmischung
(b) in einer Gesamtmenge im Bereich von 40 bis 60 phr vorliegt, vorzugsweise von 44 bis 58 phr, weiter vorzugsweise von 47 bis 56 phr, bevorzugt von 49 bis 54 phr, am bevorzugtesten von 51 bis 54 phr, und/oder
(c) in einer Gesamtmenge im Bereich von 8 bis 25 phr vorliegt, vorzugsweise von 9 bis 21 phr, weiter vorzugsweise von 10 bis 17 phr, bevorzugt von 11 bis 15 phr, am bevorzugtesten von 12 bis 14 phr.

Im Kontext der vorliegenden Erfindung ist es entscheidend, dass (b) (d.h. die Gesamtmenge an Ruß) in einer signifikant größeren Gesamtmenge vorliegt als die Gesamtmenge von (c) (d.h. die Gesamtmenge an Silica-Füllstoff). Die Kautschukmischung, und somit ein daraus resultierendes Bauteil, weist daher eine vorteilhafte elektrische Leitfähigkeit auf, da die Gesamtmenge an Ruß in einem vergleichsweise hohen Bereich liegt. Dies führt zu einer vorteilhaften Ableitung elektrischer Ladungen.

Vorzugsweise umfasst der eine oder mehr als eine Silica-Füllstoff amorphes Siliciumdioxid und/oder pyrogenes Siliciumdioxid. Ein besonders bevorzugtes amorphes Siliciumdioxid umfasst gefällte Kieselsäure, die typischerweise auch als gefälltes Siliciumdioxid bezeichnet wird. Besonders bevorzugt umfasst die Gesamtmenge an Silica-Füllstoff ausschließlich Kieselsäuren.

Besonders bevorzugt ist amorphes Siliciumdioxid, vorzugsweise gefällte Kieselsäure, mit einer Stickstoff-Oberfläche (BET-Oberfläche) (gemäß DIN ISO 9277 und DIN 66132) im Bereich von 35 bis 400 m²/g, bevorzugt von 50 bis 350 m²/g, besonders bevorzugt von 85 bis 320 m²/g, ganz besonders bevorzugt von 120 bis 235 m²/g, weiter ganz besonders bevorzugt von 140 bis 200 m²/g, und/oder (vorzugsweise und) mit einer CTAB-Oberfläche (gemäß ASTM D 3765) im Bereich von 30 bis 400 m²/g, bevorzugt von 50 bis 330 m²/g, besonders bevorzugt von 80 bis 300 m²/g, ganz besonders bevorzugt von 115 bis 200 m²/g, weiter ganz besonders bevorzugt von 140 bis 190 m²/g. In einigen Fällen ist eine BET-Oberfläche im Bereich von 100 bis 400 m²/g bevorzugt, weiter bevorzugt von 120 bis 350 m²/g, besonders bevorzugt von 145 bis 300 m²/g, ganz besonders bevorzugt von 120 bis 235 m²/g, und/oder (vorzugsweise und) eine bevorzugte CTAB-Oberfläche im Bereich von 100 bis 400 m²/g, weiter bevorzugt von 120 bis 350 m²/g, besonders bevorzugt von 140 bis 300 m²/g, ganz besonders bevorzugt von 150 bis 270 m²/g. Derartiges Siliciumdioxid führt z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die häufig zu einer verbesserten Produktivität führen. Besonders bevorzugt ist eine Kieselsäure des Typs Ultrasil^{®} VN3 (Handelsname) der Firma Evonik. Weiter bevorzugt sind zudem hoch-dispergierbare Kieselsäuren (sogenannte HD-Kieselsäuren). Bevorzugte hoch-dispergierbare Kieselsäuren umfassen Zeosil^{®} 1165 MP der Firma Solvay, Ultrasil 7000 der Firma Evonik sowie Hi-Sil 134G der Firma PPG Industries.

Als Ruß kommen grundsätzlich alle dem Fachmann bekannten Rußtypen in Frage. Bevorzugt ist der eine oder mehr als eine Ruß gemäß (b) ausgewählt aus der Gruppe bestehend aus Industrieruß und Pyrolyse-Ruß, wobei ein Industrieruß bevorzugt ist. Bevorzugt hat der eine oder mehr als eine Ruß eine Jodzahl, gemäß ASTM D 1510 (die auch als Jodadsorptionszahl bezeichnet wird), in einem Bereich von 30 bis 250 g/kg, bevorzugt von 35 bis 215 g/kg, besonders bevorzugt von 40 bis 180 g/kg, ganz besonders bevorzugt von 45 bis 140 g/kg und insbesondere bevorzugt von 80 bis 140 g/kg, und/oder eine DBP-Zahl, gemäß ASTM D 2414, in einem Bereich von 30 bis 200 ml/100 g, bevorzugt von 70 bis 170 ml/100 g, besonders bevorzugt von 90 bis 140 ml/100 g. Die DBP-Zahl gemäß ASTM D 2414 bestimmt das spezifische Absorptionsvolumen eines Rußes oder eines hellen Füllstoffes mittels Dibutylphthalat. Die Verwendung eines solchen Rußes in der erfindungsgemäßen Kautschukmischung, insbesondere für Fahrzeugreifen, gewährleistet üblicherweise einen bestmöglichen Kompromiss aus Abriebwiderstand und Wärmeaufbau, der wiederum den ökologisch relevanten Rollwiderstand beeinflusst. Besonders bevorzugt ist ein Ruß mit einer Jodzahl im Bereich von 100 bis 135 g/kg und einer DBP-Zahl im Bereich von 110 bis 140 ml/100 g. Ganz besonders bevorzugt ist ein Ruß des Typs N121 und/oder N339. Weiter bevorzugt weist der Ruß eine CTAB-Oberfläche (gemäß ASTM D 3765) im Bereich von 50 bis 250 m²/g, bevorzugt von 70 bis 200 m²/g, besonders bevorzugt von 90 bis 180 m²/g, ganz besonders bevorzugt von 100 bis 140 m²/g.

Neben den Mischungsbestandteilen (a), (b), (c) und (d) umfasst erfindungsgemäß die einzusetzende Kautschukmischung einen oder mehr als einen weiteren Zusatzstoff. Hierbei handelt es sich vorzugsweise um übliche Zusatzstoffe in den typischen Mengen, die bei der Herstellung einer entsprechenden Kautschukmischung vorzugsweise in wenigstens eine Grundmischstufe zugegeben werden.

Vorzugsweise umfasst der eine oder mehr als eine weitere Zusatzstoff:
i) Weichmacher, vorzugsweise ausgewählt ist aus der Gruppe bestehend aus Ölen und Harzen;
ii) Alterungsschutzmittel, vorzugsweise umfassend para-Phenylendiamine und/oder Dihydrochinoline; besonders bevorzugt ausgewählt aus der Gruppe bestehend aus N-Phenyl-N'-(1,3-dimethylbutyl)-p-phenylendiamin (6PPD), N,N'-Diphenyl-p-phenylendiamin (DPPD), N-(1-phenylethyl)-N'-phenyl-p-phenylendiamin (SPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD), und 2,2,4-Trimethyl-1,2-dihydrochinolin (TMQ);
iii) Aktivatoren; vorzugsweise umfassend Zinkverbindungen (inklusive Zinkkomplexe) und/oder Fettsäuren; besonders bevorzugt umfassend Zinkoxid, Stearinsäure und/oder Zinkethylhexanoat;
iv) Agenzien für die Anbindung von Füllstoffen (insbesondere für Ruße und Kieselsäuren); vorzugsweise umfassend S-(3-Aminopropyl)-Thioschwefelsäure, deren Metallsalze (besonders für die Anbindung an Ruß) und/oder Silan-Kupplungsagenzien (besonders für die Anbindung an Siliciumdioxid, insbesondere an Kieselsäure);
v) Ozonschutzwachse;
vi) Harze, vorzugsweise Klebharze, die keine Weichmacherharze sind;
vii) Mastikationshilfsmittel; vorzugsweise umfassend 2,2'-Dibenzamidodiphenyldisulfid (DBD); und/oder
viii) Prozesshilfsmittel; vorzugsweise umfassend Fettsäureester und/oder Metallseifen, wobei bevorzugte Metallseifen Zinkseifen und/oder Calciumseifen umfassen.

Bevorzugte Öle als Weichmacher gemäß i) umfassen Mineralöle und/oder Pflanzenöle. Ein insbesondere bevorzugtes Pflanzenöl umfasst Rapsöl. Pflanzenöle umfassen typischerweise Triglyceride. Bevorzugte Mineralöle umfassen aromatische, naphthenische und/oder paraffinische Mineralöle. Insbesondere bevorzugte Mineralöle umfassen MES (mild extraction solvate), DAE (Destillated Aromatic Extracts), RAE (Residual Aromatic Extract), TDAE (treated distillate aromatic extract), und Rubber-to-Liquid-Öle (RTL). In manchen Fällen ist eine Kombination aus einem oder mehr als einem Mineralöl und einem oder mehr als einem Pflanzenöl besonders bevorzugt. Im Kontext der vorliegenden Erfindung ist RAE ein ganz besonders bevorzugter Weichmacher.

Bevorzugte Harze als Weichmacher gemäß i) umfassen Kohlenwasserstoffharze oder natürliche Harze. Besonders bevorzugt umfassen die Harze eines aus der Gruppe bestehend aus AMS Harzen, Terpenharzen, Phenolharzen, Cumaron-Inden-Harzen, aliphatischen Kohlenwasserstoffharzen, aromatischen Kohlenwasserstoffharzen und natürlichen Harzen.

Bevorzugt ist ein erfindungsgemäßer Laufstreifen, vorzugsweise wie vorstehend und/oder nachstehend als bevorzugt beschrieben, wobei in der Kautschukmischung der Weichmacher gemäß i) in einer Gesamtmenge im Bereich von 1 bis 20 phr vorliegen, bevorzugt von 2 bis 12 phr, besonders bevorzugt von 3 bis 8 phr, ganz besonders bevorzugt im Bereich von 3 bis 5 phr.

Bevorzugt ist ein erfindungsgemäßer Laufstreifen, vorzugsweise wie vorstehend und/oder nachstehend als bevorzugt beschrieben, wobei in der Kautschukmischung die Alterungsschutzmittel gemäß ii) in einer Gesamtmenge im Bereich von 1 bis 15 phr vorliegen, bevorzugt von 1,5 bis 10 phr, besonders bevorzugt von 2 bis 7 phr, ganz besonders bevorzugt im Bereich von 2,5 bis 5 phr.

Bevorzugt ist ein erfindungsgemäßer Laufstreifen, vorzugsweise wie vorstehend und/oder nachstehend als bevorzugt beschrieben, wobei in der Kautschukmischung die Aktivatoren gemäß iii) in einer Gesamtmenge im Bereich von 1 bis 10 phr vorliegen, bevorzugt von 1,5 bis 8 phr, besonders bevorzugt von 2 bis 6 phr, ganz besonders bevorzugt im Bereich von 2,5 bis 4 phr. Besonders bevorzugte Aktivatoren umfassen Zinkoxid und/oder Stearinsäure. Das Zinkoxid liegt vorzugsweise als Granulat und/oder Pulver vor. Bevorzugt besitzt das Zinkoxid eine BET-Oberfläche bis zu 100 m²/g, vorzugsweise in einem Bereich von 1 bis 100 m²/g. In einigen Fällen ist ein Zinkoxid bevorzugt, wobei die BET-Oberfläche kleiner 10 m²/g ist. In anderen Fällen ist ein Zinkoxid bevorzugt, wobei die BET-Oberfläche im Bereich von 10 bis 100 m²/g liegt. In einigen Fällen sind sogenannte "nano-Zinkoxide" bevorzugt.

Bevorzugt ist ein erfindungsgemäßer Laufstreifen, vorzugsweise wie vorstehend und/oder nachstehend als bevorzugt beschrieben, wobei in der Kautschukmischung die Agenzien für die Anbindung von Füllstoffen (sogenannte Kupplungsagenzien) gemäß iv) in einer Gesamtmenge im Bereich von 0,1 bis 10 phr vorliegen, bevorzugt von 0,5 bis 5 phr, besonders bevorzugt von 1 bis 2,5 phr. Besonders bevorzugte Kupplungsagenzien umfassen Silan-Kupplungsagenzien, vorzugsweise schwefelhaltige Silan-Kupplungsagenzien.

Silan-Kupplungsagenzien reagieren typischerweise mit den oberflächlichen Silanolgruppen des Siliciumdioxids (insbesondere der Kieselsäure) oder anderen polaren Gruppen, entweder während des Mischens der Kautschukmischung (in *situ*) oder bereits vor der Zugabe dessen zur Kautschukmischung während einer Vorbehandlung (Vormodifizierung). Bevorzugte Silan-Kupplungsagenzien umfassen bifunktionale Organosilane, die am Siliciumatom mindestens eine Alkoxy-, Cycloalkoxy- oder Phenoxygruppe als Abgangsgruppe besitzen und als zusätzliche Funktionalität eine Gruppe aufweisen, die (gegebenenfalls nach Spaltung) eine chemische Reaktion mit den Doppelbindungen des Polymers eingehen kann. Bevorzugte Gruppen umfassen -SCN, -SH, -NH₂ und/oder -Sₓ-(mit x = 2 bis 8). Silan-Kupplungsagenzien mit einer -SH Gruppe werden typischerweise auch als Mercaptosilane bezeichnet. Bevorzugte Mercaptosilane umfassen geblockte Mercaptosilane, vorzugsweise gemäß WO 99/09036 A1. Der Einsatz solcher Mercaptosilane als Kupplungsagenzien sind im Kontext der vorliegenden Erfindung besonders bevorzugt und daher vorzugsweise in der erfindungsgemäßen Kautschukmischung enthalten. Diese liegen entweder in freier Form vor oder bereits mit Anbindung an den Silica-Füllstoff (Vormodifizierung), vorzugsweise in freier Form. Besonders bevorzugte Silan-Kupplungsagenzien umfassen 3-Mercaptopropyltriethoxysilan, 3-Thiocyanato-propyltrimethoxysilan, 3,3'-Bis(triethoxysilylpropyl)polysulfide mit 2 bis 8 Schwefelatomen (besonders bevorzugt 3,3'-Bis(triethoxysilylpropyl)tetrasulfid (TESPT) und/oder dessen Disulfid (TESPD)) und/oder Gemische der Sulfide mit vorzugsweise jeweils unterschiedlicher Anzahl an Schwefelatomen. In einigen Fällen ist TESPT bevorzugt, besonders bevorzugt als Gemisch mit Industrieruß (Handelsname X50S^{®} der Firma Evonik). Bevorzugte Silan-Kupplungsagenzien umfassen, zusätzlich oder alternativ, auch solche gemäß WO 2008/083241 A1, WO 2008/083242 A1, WO 2008/083243 A1, WO 2008/083244 A1 und/oder WO 2023/104252 A1. Weitere bevorzugte Silan-Kupplungsagenzien, zusätzlich oder alternativ, umfassen unter dem Namen NXT in verschiedenen Varianten von der Firma Momentive, USA, vertriebene Silane (vorzugsweise 3-Octanoylthio-1-propyltriethoxysilan) und/oder unter dem Namen VP Si 363^{®} von der Firma Evonik Industries vertriebene Silane.

Bevorzugt ist ein erfindungsgemäßer Laufstreifen, vorzugsweise wie vorstehend und/oder nachstehend als bevorzugt beschrieben, wobei die eingesetzte Kautschukmischung vulkanisiert oder teilvulkanisiert ist, vorzugsweise vulkanisiert. Dies bedeutet, dass sie vorzugsweise vollständig vulkanisiert oder mindestens teilvulkanisiert im Laufstreifen zur Anwendung kommt, besonders bevorzugt in einem Fahrzeugluftreifen. Im Kontext der vorliegenden Erfindung werden die Begriffe "vulkanisiert" und "vernetzt" synonym verwendet. Daher ist die Kautschukmischung vorzugsweise eine vernetzte Kautschukmischung. Dem Fachmann ist jedoch selbstverständlich klar, dass bis zur maßgeblichen Verarbeitung bzw. Verwendung die Kautschukmischung typischerweise nicht vulkanisiert vorliegt.

Die Vulkanisation bzw. das Vulkanisieren der eingesetzten Kautschukmischung erfolgt bevorzugt in Anwesenheit von Schwefel und/oder Schwefelspendern, vorzugsweise unter Mitwirkung von Vulkanisationsbeschleunigern, wobei vorzugsweise einige Vulkanisationsbeschleuniger zugleich Schwefelspender sind. Bevorzugt ist eine erfindungsgemäßer Laufstreifen, vorzugsweise wie vorstehend und/oder nachstehend als bevorzugt beschrieben, wobei die Kautschukmischung Schwefel und/oder einen oder mehr als einen Schwefelspender umfasst. Hinsichtlich der Schwefelspender gibt es keine besondere Einschränkung, so dass grundsätzlich alle für den Fachmann bekannten Schwefelspender in Betracht kommen, solange sie unter den vorliegenden Bedingungen Schwefel in entsprechender Form zur Verfügung stellen. Der eine oder mehr als eine Schwefelspender ist vorzugsweise ausgewählt aus der Gruppe bestehend aus Thiuramdisulfiden, Thiuramtetrasulfiden, Dithiophosphaten, und Polysulfiden. Bevorzugte Thiuramdisulfide umfassen Tetrabenzylthiuramdisulfid (TBzTD), Tetramethylthiuramdisulfid (TMTD) und/oder Tetraethylthiuramdisulfid (TETD).

Bevorzugte Thiuramtetrasulfide umfassen Dipentamethylenthiuramtetrasulfid (DPTT). Bevorzugte Dithiophosphate umfassen Bis(diisopropyl)thiophosphoryldisulfid (DIPDIS), Zinkdichloryldithiophosphat, und/oder Zinkalkyldithiophosphat. Bevorzugte Polysulfide umfassen Bis(O,O-2-ethylhexyl-thiophosphoryl)polysulfid, Diarylpolysulfide und/oder Dialkylpolysulfide. Bevorzugt ist eine erfindungsgemäße Kautschukmischung umfassend (alternativ oder zusätzlich zu einem Schwefelspender) einen oder mehr als einen Vulkanisationsbeschleuniger. Bevorzugte Vulkanisationsbeschleuniger umfassen Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger und/oder Guanidin-Beschleuniger. Besonders bevorzugt ist ein oder mehr als ein Sulfenamidbeschleuniger und/oder ein oder mehr als ein Guanidin-Beschleuniger, ganz besonders ein oder mehr als ein Beschleuniger ausgewählt aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS) und Diphenylguanidin (DPG).

Bevorzugt ist ein erfindungsgemäßer Laufstreifen, vorzugsweise wie vorstehend und/oder nachstehend als bevorzugt beschrieben, wobei die Kautschukmischung einen oder mehr als einen Vulkanisationsverzögerer umfasst. Die Anwesenheit eines Vulkanisationsverzögerers trägt beispielsweise zu einem besser ausbalancierten Vulkanisationsverlauf bei. Ein bevorzugter Vulkanisationsverzögerer umfasst N-(Cyclohexylthio)phthalimid (CTP).

Die eingesetzte Kautschukmischung wird vorzugsweise hergestellt oder bereitgestellt, besonders bevorzugt hergestellt. Dies erfolgt vorzugsweise nach in der Kautschukindustrie üblichen Verfahren, bei denen zunächst in einer oder mehr als einer Mischstufe eine Grundmischung mit allen Bestandteilen außer (d.h. abzüglich) dem Vulkanisationssystem bereitgestellt wird, wobei das Vulkanisationssystem den Schwefel und die vulkanisationsbeeinflussenden Verbindungen umfasst, d.h. vorzugsweise die Gesamtmenge aus Schwefel, Schwefelspender, Vulkanisationsbeschleuniger und Vulkanisationsverzögerer. Durch Zugabe des Vulkanisationssystems in einer letzten Mischstufe wird eine Fertigmischung erzeugt, welche vorzugsweise durch Extrusion und/oder Kalandrieren weiterverarbeitet und in die gewünschte Form gebracht wird. Die dabei erzielte Form entscheidet vorzugsweise über die anschließende Verwendung, wie z.B. in einem Laufstreifen für einen Fahrzeugluftreifen.

Eigene Untersuchungen haben aufgezeigt, dass im Kontext der vorliegenden Erfindung eine unerwartete Synergie beim Zusammenwirken ausgewählter Profileigenschaften und einer gezielt definierten Kautschukmischung erreicht werden. Dies bedeutet, dass neben diesen ausgewählten Profileigenschaften der Kautschukmischung eine nicht zu vernachlässigende separate Bedeutung beikommt. Die vorliegende Erfindung betrifft daher auch eine besonders spezifische Kautschukmischung, die sich besonders bevorzugt für die Fertigung von Laufstreifen für Fahrzeugreifen mit den oben genannten vorteilhaften Eigenschaften eignet. Diese erfindungsgemäße Kautschukmischung umfasst
(a) einen oder mehr als einen natürlichen Kautschuk in einer Gesamtmenge im Bereich von 35 bis 55 phr,
(b) einen oder mehr als einen Ruß in einer Gesamtmenge im Bereich von 40 bis 60 phr,
(c) einen oder mehr als einen Silica-Füllstoff in einer Gesamtmenge im Bereich von 8 bis 25 phr,
(d) einen oder mehr als einen endgruppen-funktionalisierten Styrol-Butadien Kautschuk in einer Gesamtmenge im Bereich von 45 bis 65 phr und mit einem Vinylgehalt kleiner 50 %, bezogen auf alle ursprünglichen Butadien-Monomere im Polymer.

Eigene Untersuchungen haben gezeigt, dass besonders eine solche spezifische Kautschukmischung eine hervorragende Basis für die erforderlichen Profilmerkmale darstellt.

Das vorstehend Gesagte bezüglich der Kautschukmischung zum Einsatz in dem erfindungsgemäßen Laufstreifen, insbesondere bevorzugte Merkmale der Kautschukmischung, gilt *mutatis mutandis* auch für diese besonders spezifische, erfindungsgemäße Kautschukmischung.

Der Laufstreifen kann mit weiteren Merkmalen fortgebildet werden, die im Zusammenhang mit der besonders spezifischen Kautschukmischung und/oder dem erfindungsgemäßen Fahrzeugreifen beschrieben sind. Der erfindungsgemäße Fahrzeugreifen kann mit weiteren Merkmalen fortgebildet werden, die im Zusammenhang mit der besonders spezifische Kautschukmischung und/oder dem erfindungsgemäßen Laufstreifen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch und ausschnittsweise eine Draufsicht auf eine Ausführungsform eines erfindungsgemäßen Laufstreifens,
Figur 2 schematisch und ausschnittsweise eine perspektivische Ansicht des in Figur 1 gezeigten Laufstreifens,
Figur 3 schematisch und ausschnittsweise eine Draufsicht auf eine weitere Ausführungsform eines erfindungsgemäßen Laufstreifens,
Figur 4 schematisch und ausschnittsweise eine perspektivische Ansicht einer Form zur Herstellung des in Figur 3 gezeigten Laufstreifens.

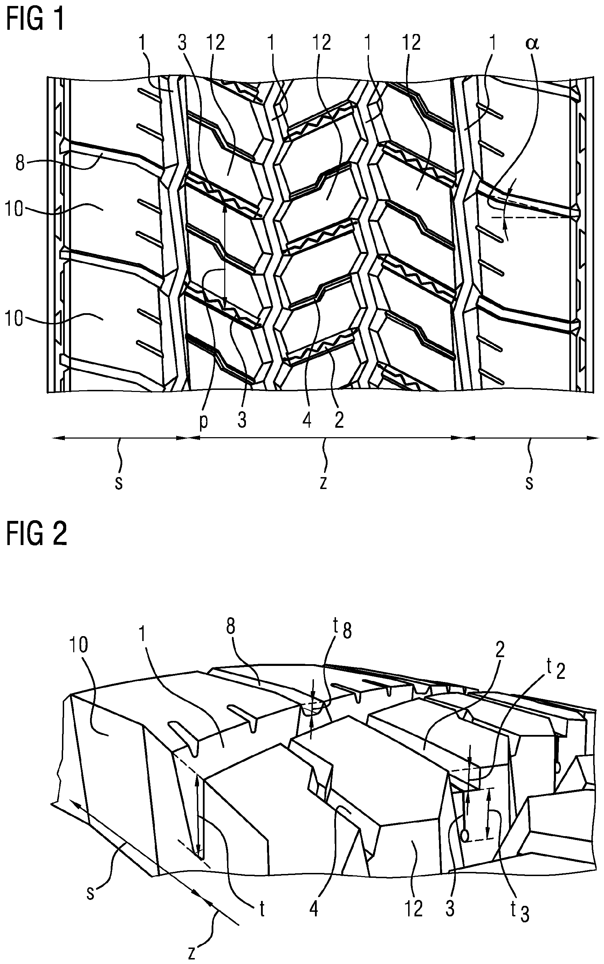

Figur 1 zeigt einen Umfangsabschnitt einer Ausführungsform eines erfindungsgemäßen Laufstreifens, der insbesondere für einen Einsatz an einem für eine Lenkachse bestimmten Fahrzeugreifen geeignet ist. Der Laufstreifen ist in einem abgewickelten Zustand dargestellt, wobei die Umfangsrichtung in der Zeichnungsebene von oben nach unten und die Querrichtung von links nach rechts verläuft. Vier Umfangsrillen 1 verlaufen durch den Laufstreifen, wobei die beiden axial äußeren Umfangsrillen 1 jeweils einen Schulterbereich s von dem axial zentralen Bereich z abgrenzen.

In dem axial zentralen Bereich z verlaufen in Schrägrichtung zwischen jeweils zwei Umfangsrillen 1 zentrale Negativelemente 2, 3, 4. Wie in Figur 2 besser zu erkennen, sind die zentralen Negativelemente 2, 4 im Vergleich zu der maximalen Profiltiefe t von geringer Tiefe (vgl. die in Figur 2 markierte Tiefe t₂ des zentralen Negativelements 2) und können auch als Oberflächenelemente 2, 4 bezeichnet werden. Hierbei sind primäre Oberflächenelemente 2 breiter als sekundäre Oberflächenelemente 4. Am Boden der primären Oberflächenelemente 2 verläuft jeweils ein Feineinschnitt 3, der sich gemäß Figur 2 mit einer Tiefe t₃ radial bis nahe der maximalen Profiltiefe t erstreckt. Die Feineinschnitte 3 verlaufen gemäß Figur 1 entlang ihrer Längserstreckung zickzackförmig und können auch in radialer Richtung zickzackförmig oder geschwungen verlaufen; ein solchermaßen dreidimensional ausgeformter Feineinschnitt wird auch als Matrix-Feineinschnitt oder Matrixlamelle bezeichnet. Eine Pitchlänge p ist zwischen zwei in Umfangsrichtung benachbarten gleichartigen zentralen Negativelementen 2, 3 messbar, in dem in Figur 1 dargestellten Fall insbesondere zwischen zwei Feineinschnitten 3. Die Pitchlänge kann entlang der Umfangsrichtung in an sich bekannter Weise im Rahmen einer Pitchlängenvariation leicht veränderlich sein. Sich zwischen jeweils zwei Umfangsrillen 1 und entlang jeweils einer Pitchlänge erstreckende Bereiche des Laufstreifens 1 können aus funktioneller Sicht als Profilblöcke 12 bezeichnet werden. Die sekundären Oberflächenelemente 4 verlaufen in Schrägrichtung jeweils etwa durch die Mitte eines dieser zentralen Profilblöcke 12.

Wie gemäß Figur 1 zu erkennen, verlaufen in den Schulterbereichen s schulterseitige Negativelemente 8. Diese weisen, wie in Figur 2 zu erkennen, eine im Vergleich zur maximalen Profiltiefe t geringe Tiefe t₈ auf. Unterhalb der schulterseitigen Negativelemente 8 verläuft eine zusammenhängende Umfangsrippe 10; eine Unterteilung der Schulterbereiche s in Profilblöcke ist in diesem Fall aus funktioneller Sicht nicht gegeben. Gemäß Figur 1 verlaufen die schulterseitigen Negativelemente 8 jeweils unter einem Erstreckungswinkel α gegenüber der Axialrichtung bzw. Querrichtung, wobei α einen Wert von etwa 14° annimmt. Der Winkel α wird hierbei zwischen den beiden Enden eines Negativelements 8 ermittelt, wobei die Negativelemente 8 in dem gezeigten Beispiel einem leicht geknickten Verlauf mit jeweils zwei Teilabschnitten folgen und in den zwei Teilabschnitten im Vergleich zu dem Erstreckungswinkel α etwas höhere bzw. niedrigere Neigungswinkel gegenüber der Axialrichtung aufweisen können.

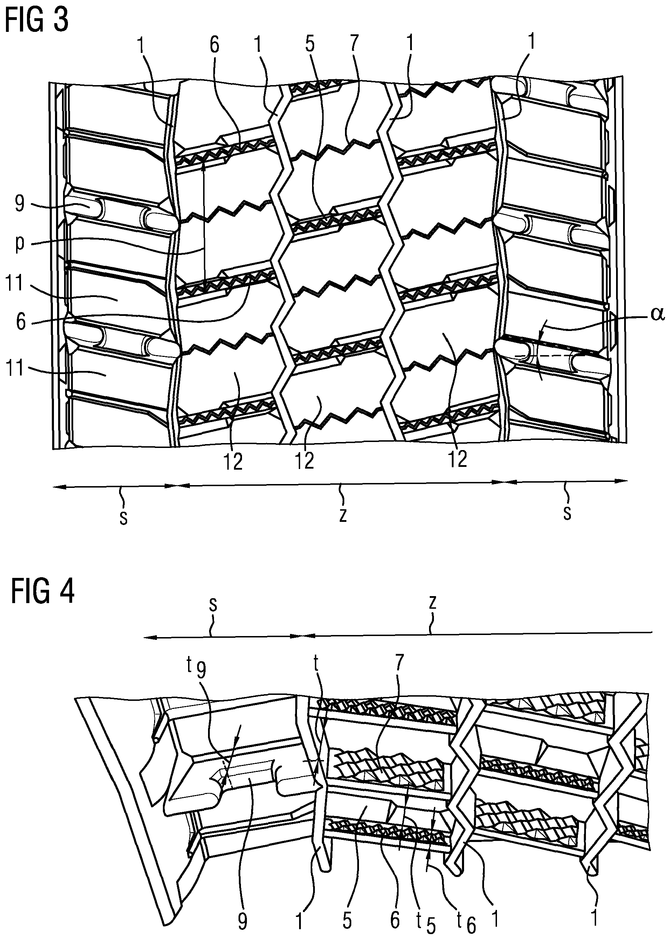

Figur 3 zeigt einen Umfangsabschnitt einer weiteren Ausführungsform eines erfindungsgemäßen Laufstreifens, der insbesondere für einen Einsatz an einem für eine Antriebsachse bestimmten Fahrzeugreifen geeignet ist. Der Laufstreifen ist in einem abgewickelten Zustand dargestellt, wobei die Umfangsrichtung in der Zeichnungsebene von oben nach unten und die Querrichtung von links nach rechts verläuft. Vier Umfangsrillen 1 verlaufen durch den Laufstreifen, wobei die beiden axial äußeren Umfangsrillen 1 jeweils einen Schulterbereich s von dem axial zentralen Bereich z abgrenzen.

In dem axial zentralen Bereich z verlaufen zwischen jeweils zwei Umfangsrillen 1 in Schrägrichtung zentrale Negativelemente 5, 6, 7, deren Tiefenverlauf der Figur 4 entnommen werden kann. Figur 4 zeigt in perspektivier Ansicht eine Unterseite einer Form zur Herstellung des Laufstreifens gemäß Figur 3, wobei die Unterseite beim Formen des Profils mit dem Laufstreifen in direkten Kontakt tritt, um unter anderem die Negativelemente 5, 6, 7, 9 in den Laufstreifen zu prägen. Elemente der Form werden in Figur 4 mit den gleichen Referenzzeichen gekennzeichnet wie damit korrespondierende Profilmerkmale in Figur 3. Als primäre zentrale Negativelemente 5, 6 sind Kombinationen aus jeweils einer Schrägrille 5 und einem ergänzenden Feineinschnitt 6 zu erkennen, wobei sich die Schrägrille 5 und der ergänzende Feineinschnitt 6 jeweils über eine Tiefe t₅, t₆ von etwa einer halben maximalen Profiltiefe t erstrecken, sodass sich der ergänzende Feineinschnitt 6 radial bis nahe der maximalen Profiltiefe t erstreckt. Die ergänzenden Feineinschnitte 6 verlaufen gemäß Figur 3 entlang ihrer Längserstreckung zickzackförmig und sind gemäß Figur 4 auch in radialer Richtung zickzackförmig moduliert; ein solchermaßen dreidimensional ausgeformter Feineinschnitt wird auch als Matrix-Feineinschnitt oder Matrixlamelle bezeichnet. Als sekundäre zentrale Negativelemente 7 sind Matrix-Feineinschnitte vorgesehen, die sich in Schrägrichtung zwischen zwei benachbarten Umfangsrillen 1 und radial bis nahe der maximalen Profiltiefe t erstrecken. Eine Pitchlänge p ist zwischen zwei in Umfangsrichtung benachbarten gleichartigen Kombinationen aus zentralen Negativelementen 5, 6 messbar, in dem in Figur 3 dargestellten Fall insbesondere zwischen zwei ergänzenden Feineinschnitten 6. Die Pitchlänge kann entlang der Umfangsrichtung in an sich bekannter Weise im Rahmen einer Pitchlängenvariation leicht veränderlich sein. Die Umfangsrillen 1 und die Kombinationen der primären Negativelemente 5, 6 unterteilen den axial zentralen Bereich z des Laufstreifens 1 aus funktioneller Sicht in Profilblöcke 12, wobei die sekundären zentralen Negativelemente 7 in Schrägrichtung jeweils etwa durch die Mitte eines dieser zentralen Profilblöcke 12 verlaufen.

Wie gemäß Figur 3 zu erkennen, verlaufen in den Schulterbereichen s schulterseitige Negativelemente 9. Diese weisen, wie in Figur 4 zu erkennen, in ihrer geringsten radialen Erstreckung eine Tiefe t₉ von etwa der Hälfte der maximalen Profiltiefe t auf und erstrecken sich maximal bis auf die maximale Profiltiefe t. Die schulterseitigen Negativelemente 9 unterteilen die Schulterbereiche s in schulterseitige Profilblöcke 11. Gemäß Figur 3 verlaufen die schulterseitigen Negativelemente 9 jeweils unter einem Erstreckungswinkel α gegenüber der Axialrichtung bzw. Querrichtung, wobei α einen Wert von etwa 12° annimmt. Der Winkel α wird hierbei zwischen den beiden Enden eines Negativelements 9 ermittelt, wobei in Figur 3 zu erkennende Fasen an den axialen Enden der Negativelemente 9 nicht berücksichtigt werden. In Umfangsrichtung ungefähr mittig und im Wesentlichen parallel zu den schulterseitigen Negativelementen 9 verlaufen zusätzlich schulterseitige Oberflächenelemente durch die schulterseitigen Profilblöcke 11.

### Beispiele

Nachfolgend werden die vorteilhaften Eigenschaften anhand von konkreten (aber nicht notwendigerweise limitierenden) Mischungsbeispielen von Kautschukmischungen konkretisiert und weiter erläutert.

Eine Übersicht der eingesetzten Bestandteile für Kautschukmischungen sind in Tabelle 1 zusammengefasst; die entsprechenden Mischungen in Tabelle 2, wobei "V" für nicht erfindungsgemäße Vergleichsbeispiele steht und "E" für erfindungsgemäße Beispiele.

**Tabelle 1, verwendete Mischungsbestandteile**

| | |
|---|---|
| NR | Naturkautschuk (NR TSR) |
| BR | Butadienkautschuk (BUNA CB 1203, Fa. Arlanxeo) |
| SSBR1 | Lösungspolymerisiertes Styrol-Butadien-Copolymer, (Sprintan SLR-4601; Fa. Trinseo; |
| | Tg = -25 °C, funktionalisiert, MW = ca. 400.000 g/mol, Vinylgehalt: ca. 50-60%) |
| SSBR2 | Lösungspolymerisiertes Styrol-Butadien-Copolymer, (Sprintan SLR 3402; Fa. Trinseo |
| | Tg = -62 °C, funktionalisiert, MW = ca. 470.000 g/mol, Vinylgehalt: ca. 25-30%) |
| Filler 1 | Carbon Black N121 |
| Filler 2 | Gefällte Kieselsäure (Hi-Sil 134G, Fa. PPG) |
| Weichmacher | Treated Distillate Aromatic Extracted (TDAE) |
| Additiv 1 | Alterungsschutzmittel, 6PPD + DTPD + TMQ |
| Additiv 2 | Ozonschutzwachs |
| Additiv 3 | Zinkoxid + Stearinsäure |
| Additiv 4 | Zinkseifen (Ultra-Flow 440; Fa. Performance Additives) |
| Silan | Bis(3-Triethoxysilylpropyl)disulfide (SI-80; Fa. Nanjing Shuguang Chemical) |
| Beschleuniger | Diphenylguanidin (DPG) + N-tert-Butyl-2-benzothiazylsulfenamid (TBBS) |
| Schwefelspender | lösl. Schwefel |
| Vulkanisationsverzögerer | N-(Cyclohexylthio)phthalimid (CTP) |

**Tabelle 2, Kautschukmischungen (Angaben in phr)**

| **Bestandteile** | **V** | **E** |
|---|---|---|
| NR | 30 | 40 |
| BR | 30 | - |
| SSBR1 | 40 | - |
| SSBR2 | - | 60 |
| Filler 1 | 55 | 52,5 |
| Filler 2 | 12 | 12 |
| Weichmacher | 6 | 4 |
| Additiv 1 | 3,5 | 3,5 |
| Additiv 2 | 2,5 | 2,5 |
| Additiv 3 | 3,5 | 3,5 |
| Additiv 4 | 3 | 3 |
| Silan | 1,3 | 1,3 |
| Beschleuniger | 1,7 | 1,7 |
| Schwefelspender | 1,8 | 1,8 |
| Vulkanisationsverzögerer | 0,3 | 0,3 |

Mit der in Tabelle 2 beschriebenen Mischungen wurden folgende experimentellen Ergebnisse erzielt (siehe nachfolgend Tabelle 3). Testobjekte wurden mittels Vulkanisation bei 140 °C und einer Dauer von 30 min hergestellt.

**Tabelle 3, experimentelle Ergebnisse an Testobjekten**

| **unvulkanisiert** | | **V** | **E** |
|---|---|---|---|
| t10 [min]*¹ | | 11,8 | 11,5 |
| t40 [min]*¹ | | 15,4 | 15,3 |
| t90 [min]*¹ | | 26,4 | 26,9 |
| tan d (10%) (RPA), cured*² | | 0,189 | 0,176 |
| | G'(1%) [kPa]*² | 2986 | 3042 |
| | G'(100%) [kPa]*² | 1024 | 1066 |

| **vulkanisiert** | | | |
|---|---|---|---|
| Shore A Härte (RT)^{#1} | | 68,8 | 69,2 |
| Bruchdehnung (Elongation at break) (RT) [%]^{#2} | | 379 | 415 |
| Bruchdehnung (Elongation at break) (70°C) [%]^{#2} | | 338 | 339 |
| Zugfestigkeit (tensile strength) (RT) [MPa]^{#2} | | 18,2 | 21,4 |
| Zugfestigkeit (tensile strength) (70°C) [MPa]^{#2} | | 13,4 | 14,2 |
| HSTE [MJ/m³]^{#3} | | 5,2 | 5,6 |
| Weiterreißwiderstand nach Graves (RT) [N/mm]^{#4} | | 38 | 42 |
| tan d (60°C)^{#5} | | 0,174 | 0,154 |
| Rückprallelastizität (RT) [%]^{#6} | | 39,1 | 42,2 |
| Rückprallelastizität (70°C) [%]^{#6} | | 55,9 | 56,6 |
| Spannungswert (Modul) bei 300 % Dehnung (RT) [Mpa] ^{#2} | | 15,3 | 16,0 |
| Spannungswert (Modul) bei 300 % Dehnung (70°C) [Mpa] ^{#2} | | 12,9 | 13,6 |

| | | | |
|---|---|---|---|
| ^{*1} Zeit t bis zum Erreichen von 10%, 40%, bzw. 90% der Vernetzung (S'max) gemäß ASTM D5289 aus 2012 bestimmt mittels "Moving Die Rheometer" (MDR 2000) bei 140 °C ^{*2} Verlustfaktor tan δ (10%) und dynamischer Speichermodul (G'(1%) und G'(100%)) in Anlehnung an ASTM D6601 (aus 2012) vom zweiten Dehnungssweep bei 1 Hz und 70 °C, wobei die Probekörper in der Apparatur durch 10 minütige Vulkanisation unter Druck bei 170 °C hergestellt wurden ^{#1} Shore A bei Raumtemperatur mittels Durometer gemäß DIN ISO 7619-1 ^{#2} bei Raumtemperatur und 70°C gemäß DIN 53504:2017-03 ^{#3} "High Speed Tear Energy" Test, Hochgeschwindigkeitsbruchdehnung als Reißenergie pro verformtem Volumen bei Raumtemperatur nach DIN EN 10 045 ^{#4} Weiterreißwiderstand nach Graves bei 100°C gemäß DIN 53 515; aufgeführt als Durchschnitt von Länge zu Breite ^{#5} Verlustfaktor tan d (60°C ) bei 60 °C in Anlehnung an DIN53513 an einer Probe mit 10 mm Durchmesser, bei 10 Hz, 50 N Vorkraft, ±30 N Amplitudenkraft, Meßwertaufnahme nach 30 s Prüfzeit ^{#6} Rückprallelastizität bei RT und 70 °C gemäß ISO 4662:2017-06 | | | |

Die nicht-erfindungsgemäße Vergleichsmischung V repräsentiert eine bekannte uns typische Kautschukmischung für die Verwendung zur Herstellung von Laufstreifen für Fahrzeugreifen für den Einsatz an großen Pickup-Trucks mit ca. 2500 kg bis 4500 kg Leergewicht. Gegenüber einer solchen bekannten Mischung wurden erhebliche Vorteile erzielt.

Tabelle 3 zeigt, dass sich die Bruchdehnung bei Raumtemperatur eindrucksvoll um ca. 10% erhöht hat (von 379 auf 415). Dies bedeutet, dass eine signifikante Verbesserung der Stabilität bzw. Widerstandsfähigkeit/Haltbarkeit erreicht wurde bei gleichzeitig unverändert guter Widerstandsfähigkeit bzw. Haltbarkeit unter mechanischer Beanspruchung, die auf einem vergleichsweise hohen Wert von ca. 339% verblieb (Bruchdehnung bei 70°C). Die Bruchdehnung bei 70°C ist in erster Näherung ein sehr geeigneter Parameter zur Feststellung, ob eine Kautschukmischung bzw. ein darauf basierender Fahrzeugreifen eine besonders gute Widerstandsfähigkeit gegen hohe mechanische Belastungen, wie sie beispielsweise durch das Queren von Bordsteinkanten entstehen, aufweist.

Zudem zeigt Tabelle 3 eine signifikante Erhöhung um mindestens 15% bei der Zugfestigkeit bei Raumtemperatur und eine weitere Verbesserung um mindestens 5% bei 70°C. Dies bewirkt insbesondere ein verbessertes Reißverhalten einer entsprechenden Gummimischung und damit einen verbesserten Widerstand gegen Schnitte. Zudem wirkt sich dies vorteilhaft auf das Handling bei schlechten Straßeneigenschaften aus. Auch die zunehmende Hochgeschwindigkeitsbruchdehnung und der Weiterreißwiderstand verdeutlichen eine signifikante Verbesserung der Widerstandsfähigkeit und Haltbarkeit.

Überraschend hat sich gezeigt, dass insbesondere ein signifikant verbesserter Rollwiderstand erzielt werden konnte. Der tan d (10%) als auch tan d (60°C) zeigen eine erhebliche Verringerung um ca. 10%.

Die Rückprallelastizität zeigt sowohl bei Raumtemperatur als auch bei 70°C eine leichte jedoch signifikante Erhöhung. Dies untermauert die bereits vorstehend genannten Verbesserungen in den tan d Werten und die damit einhergehende Verbesserung des Rollwiderstandes.

Weiterhin zeigt Tabelle 3, dass eine Erhöhung der Spannungswerte bei Raumtemperatur als auch bei 70°C um ca. 5% erzielt werden konnte. Dies bewirkt eine verbesserte dynamische Steifigkeit und führt somit zu angenehmeren Fahreigenschaften, insbesondere auf geschädigten Fahrbahnen.

Zur weiteren experimentellen Überprüfung wurden Laufstreifen mit der erfindungsgemäßen Kautschukmischung als auch mit der Vergleichsmischung hergestellt, die wiederum in Test-Luftreifen verbaut wurden (Reifendimension der Testreifen: 225/70 R19.5). Zusätzlich umfasst der Laufstreifen für einen entsprechend erfindungsgemäßen Luftreifen die in den Ansprüchen definierten Profilmerkmale und insbesondere die in den Figuren 1 bis 4 gezeigten Profilmerkmale, wobei sich Profilmerkmale gemäß Figuren 1 und 2 auf eine insbesondere für Lenkachsreifen geeignete Ausführungsform beziehen und Profilmerkmale gemäß Figuren 3 und 4 auf eine insbesondere für Antriebsachsreifen geeignete Ausführungsform. Der Luftreifen auf Basis der Vergleichsmischung (Vergleichstestreifen) wies hiervon teilweise abweichende Profilmerkmale auf, wobei insbesondere in dem Lenkachsreifen der Erstreckungswinkel α der schulterseitigen Negativelemente über 17° betrug und wobei insbesondere in dem Antriebsreifen das Negativvolumen weniger als 16% betrug.

Es hat sich überraschend gezeigt, dass mit solchen erfindungsgemäßen Test-Luftreifen ein verbesserter Rollwiderstand von bis zu 9% erreicht werden konnte, insbesondere für Antriebsachsreifen und mindestens 2% für Lenkachsreifen, verglichen mit entsprechenden Vergleichstestreifen (gemessen nach ISO28580). Dies ist ein überraschend und unerwartet hoher Wert.

Weiterhin wurde eine überraschend hohe Widerstandsfähigkeit bzw. Haltbarkeit unter mechanischer Belastung beobachtet, insbesondere mit Blick auf simulierte Tests gegenüber Bordsteinkontakten. Diese Beobachtung war sehr überraschend, da die Bruchdehnung bei 70°C (siehe Tabelle 3) zunächst keine signifikante Erhöhung gegenüber der Vergleichsmischung zeigte und daher eine Verbesserung nicht unmittelbar zu erwarten war. Dieser Parameter ist typischerweise sonst bereits ein Indikator für Widerstandsfähigkeit unter hoher mechanischer Belastung. Der Test mit einem erfindungsgemäßen Luftreifen zeigte nun jedoch, dass tatsächlich eine besonders gute (und damit erhöhte) Widerstandsfähigkeit erreicht wurde. Diese Verbesserung wurde anhand eines Gewichtsverlustes (mass loss) während des Tests beobachtet. Während dieses Testes wurde der durch Beschädigung auftretende Materialverlust bestimmt, wobei für erfindungsgemäße Luftreifen grundsätzlich ein signifikant geringerer Gewichtsverlust durch Materialverluste beobachtet wurde. Im Detail heißt das, dass die Lenkachsreifen ca. 15% weniger Materialverlust erfuhren (Reduzierung von 82 g auf 70 g) und Antriebsachsreifen überraschende 60% (Reduzierung von 226 g auf 84 g). Ohne zwingend an eine entsprechende Theorie gebunden zu sein, ist davon auszugehen, dass insbesondere die vorteilhafte Profilgestaltung diesen überraschenden Effekt in Kombination mit der vorteilhaften Kautschukmischung bewirkt.

Dies stellt eindrucksvoll unter Beweis, dass eine deutliche Verbesserung in der Widerstandsfähigkeit bzw. Haltbarkeit unter mechanischer Belastung erzielt wurde, wobei zusätzlich eine beachtliche Verbesserung beim Rollwiderstand beobachtet werden konnte.

### Bezugszeichenliste

- 1: Umfangsrille
- 2: zentrales Negativelement / primäres Oberflächenelement
- 3: zentrales Negativelement / Feineinschnitt
- 4: zentrales Negativelement / sekundäres Oberflächenelement
- 5: (primäres) zentrales Negativelement / Schrägrille
- 6: (primäres) zentrales Negativelement / ergänzender Feineinschnitt
- 7: (sekundäres) zentrales Negativelement
- 8: schulterseitiges Negativelement
- 9: schulterseitiges Negativelement
- 10: Umfangsrippe
- 11: schulterseitigerProfilblock
- 12: zentraler Profilblock
- p: Pitchlänge
- s: Schulterbereich
- t: maximale Profiltiefe
- t₂: Tiefe des primären Oberflächenelements 2
- t₃: Tiefe des Feineinschnitts 3
- t₈: Tiefe des schulterseitigen Negativelements 8
- t₉: Tiefe des schulterseitigen Negativelements 9
- z: zentraler Bereich
- α: Erstreckungswinkel eines Elements 8, 9 ggü. der Axialrichtung

## Patentansprüche

1. Laufstreifen für einen Fahrzeugreifen, wobei der Laufstreifen
- eine Kautschukmischung umfasst, umfassend
(a) einen oder mehr als einen natürlichen Kautschuk,
(b) einen oder mehr als einen Ruß, und
(c) einen oder mehr als einen Silica-Füllstoff,
und
- ein Profil aufweist, das wenigstens zwei Umfangsrillen (1) umfasst, wobei je eine Umfangsrille (1) je einen Schulterbereich (s) des Laufstreifens von einem axial zentralen Bereich (z) abgrenzt, wobei in dem axial zentralen Bereich (z) in Quer- und/oder Schrägrichtung verlaufende zentrale Negativelemente (2, 3, 4, 5, 6, 7) angeordnet sind und in den Schulterbereichen (s) schulterseitige Negativelemente (8, 9) angeordnet sind,
**dadurch gekennzeichnet, dass**
- der eine oder mehr als eine natürliche Kautschuk in einer Gesamtmenge von maximal 55 phr vorliegt,
- die Gesamtmenge von (b) größer als die Gesamtmenge von (c) ist,
- das Profil ein Negativvolumen von mehr als 16% aufweist, und
- die schulterseitigen Negativelemente (8, 9) unter einem Erstreckungswinkel α gegenüber der Axialrichtung verlaufen, wobei α einen Wert im Bereich von 8° bis 17° annimmt.

2. Laufstreifen gemäß einem der Ansprüche 1 oder 2, **dadurch gekennzeichnet, dass** die schulterseitigen Negativelemente (8) eine Tiefe (ts) von maximal 3 mm aufweisen und dass in dem Schulterbereich (s) unterhalb dieser Tiefe (ts) eine zusammenhängende Umfangsrippe (10) ausgebildet ist.

3. Laufstreifen gemäß einem der Ansprüche 1 oder 2, **dadurch gekennzeichnet, dass** die schulterseitigen Negativelemente (9) eine Tiefe (t₉) von mehr als 3 mm und vorzugsweise zwischen 40% und 60% der maximalen Profiltiefe (t) aufweisen, sodass zwischen den schulterseitigen Negativelementen (9) schulterseitige Profilblöcke (11) definiert werden.

4. Laufstreifen gemäß einem der Ansprüche 1 bis 3, **dadurch gekennzeichnet, dass** ein Verhältnis zwischen einer maximalen Profiltiefe (t) und einer Pitchlänge (p) in einem Bereich von 19% bis 35% liegt.

5. Laufstreifen gemäß Anspruch 4, **dadurch gekennzeichnet, dass** das Verhältnis zwischen der maximalen Profiltiefe (t) und der Pitchlänge (p) in einem Bereich von 21% bis 27% liegt.

6. Laufstreifen gemäß Anspruch 4, **dadurch gekennzeichnet, dass** das Verhältnis zwischen der maximalen Profiltiefe (t) und der Pitchlänge (p) in einem Bereich von 25% bis 32% liegt.

7. Laufstreifen gemäß einem der Ansprüche 1 bis 6, **dadurch gekennzeichnet, dass** die zentralen Negativelemente (5, 6, 7) Quer- und/oder Schrägrillen (5) umfassen, wobei eine Tiefe (ts) der Quer- und/oder Schrägrillen (5) zwischen 40% und 60% der maximalen Profiltiefe (t) beträgt.

8. Laufstreifen gemäß Anspruch 7, **dadurch gekennzeichnet, dass** die zentralen Negativelemente (5, 6, 7) einen ergänzenden Feineinschnitt (6) umfassen, wobei der ergänzende Feineinschnitt (6) entlang eines Rillengrundes wenigstens einer der Quer- oder Schrägrillen (5) verläuft, wobei der ergänzende Feineinschnitt (6) sich von dem Rillengrund aus um eine Tiefe (t₆) zwischen 40% bis 60% der maximalen Profiltiefe (t) radial nach innen erstreckt.

9. Laufstreifen gemäß einem der Ansprüche 1 bis 8, wobei (a) in der Kautschukmischung in einer Gesamtmenge im Bereich von 35 bis 55 phr vorliegt, vorzugsweise von 35 bis 52 phr, weiter vorzugsweise von 36 bis 49 phr, bevorzugt von 36 bis 46 phr, am bevorzugtesten von 37 bis 43 phr.

10. Laufstreifen gemäß einem der Ansprüche 1 bis 9, wobei die Kautschukmischung weiter
(d) einen oder mehr als einen funktionalisierten Styrol-Butadien Kautschuk umfasst, wobei das Mengenverhältnis, bezogen auf phr, von der Gesamtmenge von (d) zu der Gesamtmenge von (a) vorzugsweise im Bereich von 0,8 bis 1,95 liegt, weiter vorzugsweise von 0,9 bis 1,9, bevorzugt von 0,95 bis 1,85, weiter bevorzugt von 1,1 bis 1,8, am bevorzugtesten von 1,2 bis 1,75, weiter am bevorzugtesten von 1,35 bis 1,65, am weitesten bevorzugt von 1,45 bis 1,55.

11. Laufstreifen gemäß Anspruch 10, wobei (d) in einer Gesamtmenge im Bereich von 45 bis 65 phr vorliegt, vorzugsweise von 48 bis 65 phr, weiter vorzugsweise von 51 bis 64 phr, bevorzugt von 54 bis 64 phr, am bevorzugtesten von 57 bis 63 phr.

12. Laufstreifen gemäß einem der Ansprüche 10 oder 11, wobei der eine oder mehr als eine funktionalisierte Styrol-Butadien Kautschuk gemäß (d) einen oder mehr als einen lösungspolymerisierten Styrol-Butadien-Kautschuk (SSBR) umfasst.

13. Laufstreifen gemäß einem der Ansprüche 10 bis 12, wobei in der Kautschukmischung der eine oder mehr als eine funktionalisierte Styrol-Butadien Kautschuk gemäß (d), jeweils einen Vinylgehalt kleiner 50 %, bezogen auf alle ursprünglichen Butadien-Monomere im Polymer, vorzugsweise in einem Bereich von 5 bis 48 %, weiter bevorzugt von 15 bis 45 %, noch weiter bevorzugt von 17 bis 38 %, am bevorzugtesten von 24 bis 36 %.

14. Laufstreifen gemäß einem der Ansprüche 1 bis 13, wobei in der Kautschukmischung
(b) in einer Gesamtmenge im Bereich von 40 bis 60 phr vorliegt, vorzugsweise von 44 bis 58 phr, weiter vorzugsweise von 47 bis 56 phr, bevorzugt von 49 bis 54 phr, am bevorzugtesten von 51 bis 54 phr, und/oder
(c) in einer Gesamtmenge im Bereich von 8 bis 25 phr vorliegt, vorzugsweise von 9 bis 21 phr, weiter vorzugsweise von 10 bis 17 phr, bevorzugt von 11 bis 15 phr, am bevorzugtesten von 12 bis 14 phr.

15. Fahrzeugreifen, umfassend einen Laufstreifen gemäß einem der Ansprüche 1 bis 14.

16. Kautschukmischung umfassend
(a) einen oder mehr als einen natürlichen Kautschuk in einer Gesamtmenge im Bereich von 35 bis 55 phr,
(b) einen oder mehr als einen Ruß in einer Gesamtmenge im Bereich von 40 bis 60 phr,
(c) einen oder mehr als einen Silica-Füllstoff in einer Gesamtmenge im Bereich von 8 bis 25 phr,
(d) einen oder mehr als einen endgruppen-funktionalisierten Styrol-Butadien Kautschuk in einer Gesamtmenge im Bereich von 45 bis 65 phr und mit einem Vinylgehalt kleiner 50 %, bezogen auf alle ursprünglichen Butadien-Monomere im Polymer.
